# EUROPÄISCHE PATENTSCHRIFT

(11) **EP 4 187 142 B1**
(45) Veröffentlichungstag und Bekanntmachung des Hinweises auf die Patenterteilung: **07.01.2026**
(21) Anmeldenummer: 22209716.4
(22) Anmeldetag: 25.11.2022
(51) Int. Cl.: F17C 7/00

(54) **WASSERSTOFFTANKSTELLE**
HYDROGEN FILLING STATION
STATION DE RAVITAILLEMENT EN HYDROGÈNE

(30) Priorität: 25.11.2021 DE 102021130975
(43) Veröffentlichungstag der Anmeldung: 31.05.2023
(73) Patentinhaber: H2 MOBILITY Deutschland GmbH & Co. KG, 10829 Berlin (DE)
(72) Erfinder: Fronzke, Frank, 40627 Düsseldorf (DE)
(74) Vertreter: Tergau & Walkenhorst Intellectual Property GmbH

(56) Entgegenhaltungen:
- EP-A1- 3 339 716
- EP-A1- 3 767 154
- WO-A1-03/059742
- JP-A- 2005 024 061
- JP-A- 2013 024 287
- JP-A- 2016 138 594
- US-A1- 2006 180 240
- US-A1- 2020 010 966
- US-B2- 10 236 522

## Beschreibung

Die vorliegende Erfindung betrifft eine Wasserstofftankstelle. Derartige Wasserstofftankstellen bestehen nach dem Stand der Technik aus einem Niederdruckspeicher, einer Druckerhöhungsanlage, einem Hochdruckspeicher, einer Kühleinrichtung, einer Zähleinrichtung, einer zentralen Anlagensteuerung und einem Dispenser zur Befüllung der Fahrzeuge. Abgesehen vom Dispenser sind die Komponenten der Anlage in einem externen Container vom Dispenser getrennt angeordnet. Aus dem Container wird der Dispenser beim Betanken des Fahrzeugs mit Wasserstoff versorgt.

Der Dispenser einer Wasserstofftankstelle entspricht nach dem Stand der Technik der Zapfsäule einer Tankstelle für Benzin- oder Dieselkraftstoff. Er ist mit einem als Zapfpistole ausgestalteten Füllventil ausgerüstet.

Da der Container die Komponenten monolithisch zusammenfasst, können die Komponenten der Anlage nicht verändert werden. Ausserdem wird es als nachteilig empfunden, dass der an den Dispenser gelieferte Wasserstoff unabhängig von der Distanz zwischen dem Container und dem Dispenser nicht mehr gekühlt wird. Dies führt bei großen Entfernungen zwischen Container und Dispenser zu einem sehr trägen Ansprechverhalten der Kühlreinrichtung.

Derartige Wasserstoffzapfsäulen oder -tankstellen sind beispielsweise aus den Druckschriften US 10 236 522 B2, EP 3 339 716 A1, EP 3 767 154 A1 und JP 2016 138594 A bekannt.

Ausgehend hiervon liegt der Erfindung die Aufgabe zugrunde, einen Dispenser anzugeben und eine Anlage der eingangs genannten Art flexibler aufzubauen.

Diese Aufgabe ist durch die Merkmale der unabhängigen Ansprüche gelöst. Die rückbezogenen Ansprüche beinhalten vorteilhafte und teilweise für sich selbst erfinderische Weiterbildungen dieser Erfindung.

Die Grundüberlegung der Erfindung besteht darin, die Tankstelle derart modular aufzubauen, dass sämtliche Komponenten unabhängig voneinander verändert werden können.

Dabei bildet ein Dispenser die zentrale Baueinheit der Tankstellen-Anlage. In dieser zentralen Baueinheit werden die Kühleinrichtung, die Messeinrichtung, die Abgabeeinrichtung und die Anlagensteuerung zusammengefasst. Weitere Komponenten können in den Dispenser eingebracht werden. In vorteilhafter Weise sind so die für die Befüllung des Fahrzeugtanks erforderlichen Komponenten nah an der Abgabe- oder Zapfstelle für den Fahrzeugtank und damit nah am Fahrzeug untergebracht. Zugleich erfolgt die Steuerung des Gesamtsystems über den Dispenser als zentrale und damit leitende Baueinheit.

Vor allem ist es vorteilhaft, die Messeinrichtung, die Abgabeeinrichtung und die Anlagensteuerung in einer Zapfsäule physisch zusammenzufassen und die Kühleinrichtung dieser Zapfsäule direkt vorzulagern. Die Kühleinrichtung weist vorteilhaft einen von einem Wasserstoffstrom durchströmten Aluminiumblock als Wärmetauscher sowie einen Kühlkreislauf mit einem Kompressor auf. Zumindest der Wärmetauscher ist zum einfachen Abtransport der Prozesswärme außerhalb der Zapfsäule angeordnet. Der Wärmetauscher ist der Zapfsäule bevorzugt direkt vorgelagert, um die Kühlung des Wasserstoffs bis möglichst nahe an den Einfüllpunkt in das Fahrzeug zu gewährleisten. Es können auch andere Kältespeicher oder oder Wärmetauscher als ein Aluminiumblock verwendet werden.

Der Kompressor ist in die Zapfsäule integriert. Beim Betanken des Fahrzeugs kann der in den Fahrzeugtank einzufüllende Wasserstoff fahrzeugnah auf die gewünschte Temperatur heruntergekühlt werden, vorzugsweise auf -30°C bis -40°C. Der Aluminiumblock kann schnell vom Kühlsystem gekühlt werden. Die kurze Ansprechzeit des Kühlsystems ist ein Hauptvorteil des fahrzeugnahen Kühlsystems. Das Kühlsystem kann auf diese Weise also stets schnell geregelt werden. Auf diese Weise können ungewollte Abbrüche von Betankungsvorgängen aufgrund von mangelhafter Kühlung des Treibstoffs verhindert werden.

Die voluminösen Drucktanks mit verschiedenen Arbeitsdrücken des gelagerten Wasserstoffs und die jeweils zwischengeschalteten Druckerhöhungsanlagen, also die Kompressoren können jeweils optimal auf den jeweiligen Einsatzfall ausgelegt werden und werden an die zentrale Baueinheit angeschlossen und von dort gesteuert. Die Steuerung kann an die verschiedenen Anlagenkompontenten jeweils angepasst werden. In der Regel wird der Wasserstoff in einem Niederdruckspeicher bevorratet. Dem Niederdruckspeicher ist eine Kompressoranlage zugeordnet, um den Wasserstoff vor dem Einfüllen in einem Hochdruckspeicher mit einem Einfülldruck von 350 bis 450 bar oder 700 bis 880 bar zu puffern und mit diesem hohen Einfülldruck in den Fahrzeugtank einzufüllen.

Alternativ ist es mit der Erfindung auch möglich, den von Druckerhöhungsanlagen komprimierten Wasserstoff auch direkt in den Dispenser einzuleiten. Dies vereinfacht den Aufbau der Anlage durch den Wegfall der Hochdruckspeicher signifikant und senkt die Anlagenkosten.

Die Anlage kann durch einen Wechsel einzelner Komponenten an verschiedene Einsatzfälle angepasst werden. Auch kann die Anlagensteuerung modifiziert werden.

Anhand eines Ausführungsbeispiels ist die Erfindung näher erläutert. Es zeigen:
- FIG. 1: vier Baugruppen einer Wasserstofftankstelle in mehreren Varianten und
- FIG. 2: die Detailsdarstellung des Dispensers aus FIG. 1.

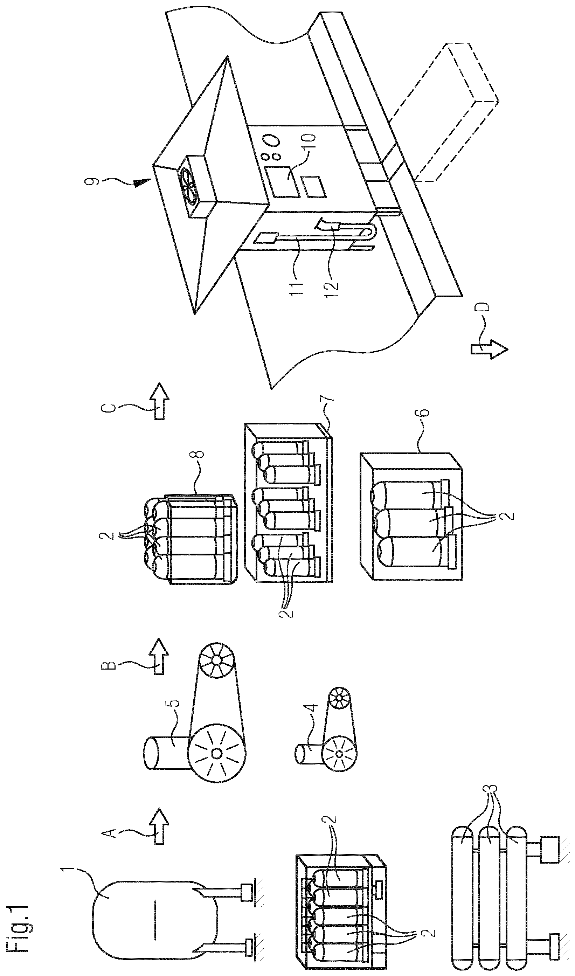

Im linken Teil der Fig.1 sind mehrere Niederdruckspeicher für größere Wasserstoffvorräte dargestellt, nämlich ein Niederdrucktank 1, ein aus mehreren in eine Pallette eingestellten Gasflaschen 2 bestehendes Gebinde und mehrere in einem Gestell übereinander angeordnete Wasserstoffbehälter 3. In diesen Niederdruckspeichern, die alternativ verwendet werden, wird Waserstoff üblicherweise bei einem Druck in der Größenordnung von 200 bar bis 300 bar gespeichert.

In einem Prozessschritt A komprimiert ein diesen Niederdruckspeichern nachgelagerter Verdichter den Wasserstoff und puffert ihn in einem weiteren Prozessschritt B in einem oder mehreren parallelen Hochdruckspeichern zwischen. Im Ausführungbeispiel sind zwei Verdichter beispielhaft dargestellt, nämlich ein Verdichter 4 mit geringerer Leistung und ein Hochleistungsverdichter 5 mit höherer Leistung.

Mit dem Verdichter 4 kann der Wasserstoff auf einen Druck von 300 bis 450 bar verdichtet werden. Der Hochleistungsverdicher 5 verdichtet den Wasserstoff auf bis zu 700 bis 880 bar. Die Hochdruckspeicher 6, 7 und 8 sind im Ausführungsbeispiel Gebinde von in eine Pallette eingestellten Gasflaschen 2. Der Hochdruckspeicher 6 enthält Wasserstoff mit einem Druck von 350 bar, die Hochdruckspeicher 7, 8 enthalten Wasserstoff mit einem Druck von 700 bar.

Ein Dispenser 9 ruft in einem Prozessschritt C aus den Hochdrucktanks 6,7,8 die in das Fahrzeug einzufüllende Wasserstoffmenge ab. In einem letzten Prozessschritt D wird Wasserstoff mit 350 bar beispielsweise in PKW und Wasserstoff mit 700 bar beispielsweise in PKW oder Nutzfahrzeuge abgefüllt. Hierfür weist der Dispenser 9 ein Bedienfeld 10 zur Eingabe der Abgabeparameter, einen Zapfschlauch 11 und Füllventil 12 auf. Das Füllventil 12 wird mit dem Einfüllstutzen des Fahrzeugs verbunden und das Fahrzeug über den Zapfschlauch 11 und das Entnahmeventil 12 betankt.

Der Dispenser 9 ist modular aufgebaut und umfasst im Ausführungsbeispiel zunächst eine an die Hochdrucktanks 6,7,8 angeschlossene Zuleitung 13. Zwischen die Hochdrucktanks 6,7,8 und diese Zuleitung 13 ist ein Aluminium-block 14 zwischengeschaltet. Dieser Aluminuimblock 14 ist zugleich als Kältespeicher und Wärmetauscher wirksam. Der Wasserstoff wird aus den Hochdrucktanks 6,7,8 durch den Aluminiumblock 14 in die Zuleitung 13 gut gekühlt eingeleitet und gelangt so von der Zuleitung 13 gekühlt in den Dispenser 9.

Der Dispenser 9 umfasst eine Zapfsäule 21. In dieser Zapfsäule 21 sind zunächst ein Kältekompressor 15 und ein Antriebsmotor 16 für diesen Kältekompressor 15 angeordnet. Eine Messeinrichtung 17 wirkt mit Messventilen 18 zusammen. Ein Steuermodul 19 umfasst die Steuerung für die gesamte Anlage. Die Steuerung steuert auch Abgabeventile 20. Durch die Abgabeventile 20 gelangt der Wasserstoff in den Zapfschlauch 11 und damit in das Füllventil 12 und ans Fahrzeug, welches in den Figuren nicht dargestellt ist. Die Abgabeventile 20, der Zapfschlauch 11 und das Füllventil 12 bilden so im Ausführungsbeispiel die Abgabeeinrichtung.

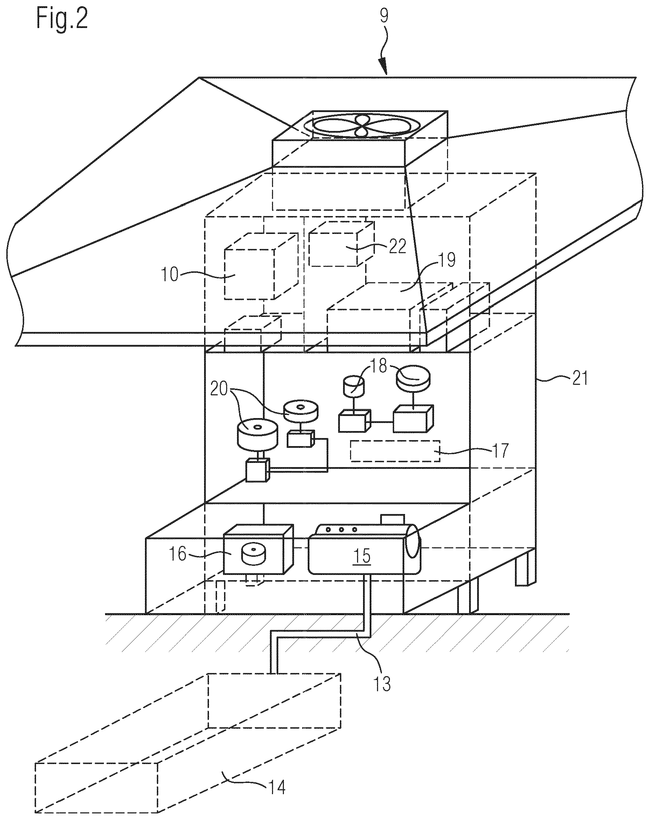

Schließlich ist in FIG. 2 noch ein Erweiterungsmodul 22 für weitere technische Funktionen erkennbar. Es können darüberhinaus weitere Erweiterungsmodule 22 mit weiteren Funktionen im Dispenser 9 angeordnet sein. Infolge des modularen Aufbaus des Dispensers 9 können die verschiedenen Einrichtungen bei Veränderungen am Layout der Anlage einfach und kostengünstig getauscht werden. Die Anlage kann mit weiteren Einrichtungen einfach modular erweitert werden. Ausserdem werden Förder-, Energie- und Steuerleitungen zu den übrigen Kompontenten, also den Speichern und den Verdichtern auf ein Minimum reduziert. Wesentliche Komponenten sind zu Modulen im Dispenser zusammengefasst.

### Bezugszeichenliste:

- 1: Niederdrucktank
- 2: Gasflasche
- 3: Wasserstoffbehälter
- 4: Verdichter
- 5: Hochleistungsverdichter
- 6: Hochdruckspeicher
- 7: Hochdruckspeicher
- 8: Hochdruckspeicher
- 9: Dispenser
- 10: Bedienfeld
- 11: Zapfschlauch
- 12: Füllventil
- 13: Zuleitung
- 14: Aluminiumblock
- 15: Kältekompressor
- 16: Antriebsmotor
- 17: Messeinrichtung
- 18: Messventil
- 19: Steuermodul
- 20: Abgabeventil
- 21: Zapfsäule
- 22: Erweiterungsmodul

## Patentansprüche

1. Wasserstofftankstelle umfassend mindestens folgende Baugruppen:
- einen Vorratsspeicher (1,2,3,6,7,8) für den Wasserstoff
- eine Druckerhöhungsvorrichtung (4,5),
- eine Kühleinrichtung (14,15,16), umfassend einen Kältekompressor (15) und einen Kältespeicher (14),
- eine Messeinrichtung (17),
- eine Abgabeeinrichtung (11,12,20) und
- eine Anlagensteuerung (19),
wobei die Tankstelle derart modular aufgebaut ist, dass die Baugruppen jeweils unabhängig voneinander veränderbar und/oder austauschbar sind, die Wasserstofftankstelle ferner aufweisend eine zentrale Baugruppe als Dispenser (9) derart, dass
- die Messeinrichtung (17),
- die Abgabeeinrichtung (11,12,20) und
- die Anlagensteuerung (19) in einer zentralen Zapfsäule (21) zusammenfasst und eingebaut sind, wobei die Kühleinrichtung aus einem der Zapfsäule (21) vorgelagerten Kältespeicher (14) und einem in der Zapfsäule (21) angeordneten Kältekompressor (15) besteht, wobei der Kältespeicher (14) und der Kältekompressor (15) über eine Zuleitung (13) für den Wasserstoff miteinander verbunden sind.

2. Wasserstofftankstelle nach Anspruch 1,
**dadurch gekennzeichnet,**
**dass** mindestens ein Vorratsspeicher (1,2,3,6,7,8) und eine Druckerhöhungsvorrichtung (4,5) außerhalb der zentralen Baugruppe angeordnet sind.

3. Wasserstofftankstelle nach einem der Ansprüche 1 bis 2
**gekennzeichnet durch**
einen aus mindestens einem Niederdrucktank (1) und/oder aus mindestens einer Gasflasche (2) und/oder aus mindestens einem Wasserstoffbehälter (3) bestehenden Niederdruckspeicher und
durch mindestens einen Verdichter (4) und/oder mindestens einen Hochleistungsverdichter (5) als Druckerhöhungvorrichtung, wobei der von dem oder den Verdichern (4) bzw. dem oder den Hochleistungsverdichtern (5) komprimierte Wasserstoff in mindestens einem Hochdruckdruckspeicher (6,7,8) vor der Abgabe an die Abgabeeinrichtung (11, 12, 20) zwischengespeichert wird.

4. Wasserstofftankstelle nach einem der Ansprüche 1 bis 2
**gekennzeichnet durch**
einen aus mindestens einem Niederdrucktank (1) und/oder aus mindestens einer Gasflasche (2) und/oder aus mindestens einem Wasserstoffbehälter (3) bestehenden Vorratsspeicher und
durch mindestens einen Verdichter (4) und/oder mindestens einen Hochleistungsverdichter (5) als Druckerhöhungvorrichtung, wobei
der von dem oder den Verdichtern (4) bzw. dem oder den Hochleistungsverdichtern (5) komprimierte Wasserstoff direkt in den Dispenser (9) eingeleitet wird.

## Claims

1. A hydrogen refueling station comprising at least the following assemblies:
- a storage tank (1, 2, 3, 6, 7, 8) for the hydrogen,
- a pressure booster (4, 5),
- a cooler (14, 15, 16), comprising a refrigeration compressor (15) and cold storage (14),
- a measuring device (17),
- a dispensing device (11, 12, 20), and
- a system controller (19),
wherein the refueling station is modular in design, such that the assemblies can each be changed and/or replaced independently of each other, wherein the hydrogen refueling station further has a central assembly as the dispenser (9), such that
- the measuring device (17),
- the dispensing device (11, 12, 20), and
- the system controller (19)
are combined and installed in a central fuel pump (21), wherein the cooling device consists of a cold storage (14) upstream from the fuel pump (21) and a refrigeration compressor (15) arranged in the fuel pump (21), wherein the cold storage (14) and the refrigeration compressor (15) are connected with each other via a feed line (13) for the hydrogen.

2. The hydrogen refueling station according to claim 1, **characterized in that** at least one storage tank (1, 2, 3, 6, 7, 8) and one pressure booster (4, 5) are arranged outside of the central assembly.

3. The hydrogen refueling station according to one of claims 1 to 2, **characterized by** a low-pressure accumulator consisting of at least one low-pressure tank (1) and/or of at least one gas cylinder (2) and/or of at least one hydrogen container (3), and
by at least one compressor (4) and/or at least one high-performance compressor (5) as the pressure booster, wherein
the hydrogen compressed by the compressor(s) (4) or the high-performance compressor(s) (5) is cached in at least one high-pressure accumulator (6, 7, 8) before being dispensed to the dispensing device (11, 12, 20).

4. The hydrogen refueling station according to one of claims 1 to 2, **characterized by** a storage tank consisting of at least one low-pressure tank (1) and/or of at least one gas cylinder (2) and/or of at least one hydrogen container (3), and
by at least one compressor (4) and/or at least one high-performance compressor (5) as the pressure booster, wherein
the hydrogen compressed by the compressor(s) (4) or the high-performance compressor(s) (5) is introduced directly into the dispenser (9).

## Revendications

1. Station d'approvisionnement en hydrogène, comprenant au moins les modules suivants :
- un accumulateur de réserve (1, 2, 3, 6, 7, 8) pour l'hydrogène
- un intensifieur de pression (4, 5),
- un système de refroidissement (14, 15, 16), comprenant un compresseur frigorifique (15) et un accumulateur de froid (14),
- un système de mesure (17),
- un système de distribution (11, 12, 20) et
- un système de commande (19) d'installation,
la station d'approvisionnement étant conçue de manière si modulaire que les modules soient modifiables et/ou interchangeables chacun indépendamment l'un de l'autre, la station d'approvisionnement en hydrogène comportant par ailleurs un module central en tant que distributeur (9), de telle sorte que
- le système de mesure (17),
- le système de distribution (11, 12, 20) et
- le système de commande (19) d'installation
soient regroupés et intégrés dans une colonne de ravitaillement (21) centralisée,
le système de refroidissement étant constitué d'un accumulateur de froid (14) monté en amont de la colonne de ravitaillement (21) et d'un compresseur frigorifique (15) placé dans la colonne de ravitaillement (21), l'accumulateur de froid (14) et le compresseur frigorifique (15) étant assemblés l'un avec l'autre par l'intermédiaire d'une conduite d'alimentation (13) pour l'hydrogène.

2. Station d'approvisionnement en hydrogène selon la revendication 1,
**caractérisée**
**en ce qu'**au moins un accumulateur de réserve (1, 2, 3, 6, 7, 8) et un intensifieur de pression (4, 5) sont placés à l'extérieur du module centralisé.

3. Station d'approvisionnement en hydrogène selon l'une quelconque des revendications 1 à 2,
**caractérisée par**
un accumulateur basse pression, constitué d'au moins une cuve basse pression (1) et/ou d'au moins une bouteille de gaz (2) et/ou d'au moins un réservoir d'hydrogène (3) et
par au moins un compresseur (4) et/ou au moins un compresseur haute performance (5) en tant qu'intensifieur de pression,
l'hydrogène comprimé par le ou les compresseurs (4) ou par le ou les compresseurs haute performance (5) étant entreposé dans au moins un accumulateur haute pression (6, 7, 8) avant sa restitution au système distributeur (11, 12, 20).

4. Station d'approvisionnement en hydrogène selon l'une quelconque des revendications 1 à 2,
**caractérisée par**
un accumulateur de réserve constitué d'au moins une cuve basse pression (1) et/ou d'au moins une bouteille de gaz (2) et/ou d'au moins un réservoir d'hydrogène (3) et
par au moins un compresseur (4) et/ou au moins un compresseur haute performance (5) en tant qu'intensifieur de pression,
l'hydrogène comprimé par le ou les compresseurs (4) ou par le ou les compresseurs haute performance (5) étant introduit directement dans le distributeur (9).
